# EUROPÄISCHE PATENTANMELDUNG

(11) **EP 1 857 581 A1**
(43) Veröffentlichungstag der Anmeldung: **21.11.2007**
(21) Anmeldenummer: 07106932.2
(22) Anmeldetag: 25.04.2007
(51) Int. Cl.: D05C 9/06, H02K 41/03

(54) **Strickrahmenantrieb**

(30) Priorität: 13.05.2006 DE 102006022414
(71) Anmelder: Schaeffler KG, 91074 Herzogenaurach (DE)
(72) Erfinder: Görgens, Detlef, 42799, Leichlingen (DE)

(57) **Zusammenfassung**

Ein Stickrahmenantrieb (1) weist einen auf einem Gestell (3) geführten Stickrahmen (2) auf, wobei zur Führung des Stickrahmens (2) ein Planarmotor (4) vorgesehen ist. Dies ermöglicht eine präzise Führung des Stickrahmens (2) ohne Verwendung von Linearführungen.

## Beschreibung

### Gebiet der Erfindung

Die Erfindung betrifft einen Stickrahmenantrieb, wobei der Stickrahmen in einer X-Y-Ebene bewegbar ist.

### Hintergrund der Erfindung

Ein Rahmenantrieb für eine Stickmaschine ist beispielsweise aus der DE 100 19 020 A1 bekannt. Dieser Rahmenantrieb weist Antriebseinheiten für die X-Richtung und Antriebseinheiten für die Y-Richtung auf, welche Gewindestangen umfassen. Des Weiteren sind in dem bekannten Rahmenantrieb Synchronisierungsgurte vorgesehen, die auch den Antrieb größerer Stickrahmen für mehrere Stickmaschinenköpfe ermöglichen. Hierbei können mehrere Synchronisierungsgurte hintereinander geschaltet sein. Durch die Mehrzahl miteinander gekoppelter Antriebselemente ist zwangsläufig eine zumindest geringfügige Elastizität im Antriebsstrang gegeben.

### Aufgabe der Erfindung

Der Erfindung liegt die Aufgabe zugrunde, Spiel und Hysterese eines Stickrahmenantriebs zu minimieren.

### Zusammenfassung der Erfindung

Diese Aufgabe wird erfindungsgemäß gelöst durch einen Stickrahmenantrieb mit den Merkmalen des Anspruchs 1. Der Stickrahmenantrieb weist einen auf einem Gestell einer Stickmaschine geführten, in einer Ebene beweglichen Stickrahmen auf, wobei zu dessen Antrieb ein Planarmotor vorgesehen ist. Ein Planarmotor ist prinzipiell beispielsweise aus der DE 10 2004 048 183 A1 bekannt. Der Stickrahmenantrieb mittels Planarmotor ermöglicht eine präzise Positionierung des Stickrahmens ohne Verwendung von Linearführungen. Hystereseeffekte sind prinzipbedingt nicht gegeben. Vorzugsweise ist der Planarmotor als Reluktanzmotor aufgebaut, welcher eine Positionierung des Stickrahmens in besonders feinen Schritten ermöglicht. Der Stickrahmen weist in einer ersten Ausgestaltung ein mit Elektromagneten arbeitendes Primärteil des Planarmotors auf, während das Sekundärteil des Planarmotors fest mit dem Gestell der Stickmaschine verbunden ist. Gemäß einer zweiten Ausgestalung, die sich insbesondere dadurch auszeichnet, dass keine Strom- oder Medienzuführung zu einem bewegten Teil erforderlich ist, ist in umgekehrter Weise das bestromte Primärteil des Planarmotors starr mit dem Maschinengestell verbunden, während das keine bestrombaren Wicklungen aufweisende Sekundärteil ein Teil des Stickrahmens ist.

Zur Lagerung des Stickrahmens auf dem Gestell der Stickmaschine ist prinzipiell eine Wälzlagerung geeignet. Als besonders vorteilhaft hat sich jedoch eine Luftlagerung erwiesen, wobei der Stickrahmen durch magnetische Kräfte an das Gestell angezogen wird, während mittels Druckluft ein dünner Luftfilm zwischen dem Stickrahmen und dem Gestell aufrecht erhalten wird. Die Luftlagerung hat den besonderen Vorteil, dass auf jegliche Schmierstoffe verzichtet werden kann, womit eine verschleiß- und wartungsfreie Lagerung gegeben ist. Die Druckluft kann dem bewegten Teil, d.h. dem Stickrahmen, oder dem Maschinengestell zugeführt werden.

Nach einer vorteilhaften Weiterbildung weist der Planarmotorantrieb zusätzlich zu einem internen Lagegeber einen weiteren Lagegeber, beispielsweise ein mit sehr hoher Auflösung arbeitendes optisches inkrementelles Meßsystem, auf. Dies ermöglicht eine Steigerung der Genauigkeit und Zuverlässigkeit der Vorrichtungen zur Lagebestimmung, ohne die Masse der bewegten Teile signifikant zu erhöhen. In sämtlichen Ausführungsformen zeichnet sich der Stickrahmenantrieb durch im Vergleich zu herkömmlichen Antrieben geringe bewegte Massen aus, so dass hohe Beschleunigungen des Stickrahmens erreichbar sind. Eine großflächige Krafteinleitung über den Planarmotor in den Stickrahmen sorgt für eine günstige Kraftverteilung mit höchstens vernachlässigbar geringen Verformungen des Stickrahmens.

Nachfolgend wird ein Ausführungsbeispiel der Erfindung anhand einer Zeichnung näher erläutert. Hierin zeigen jeweils in vereinfachter Darstellung:

### Kurze Beschreibung der Zeichnung

- Figur 1: im Querschnitt ausschnittsweise eine Stickmaschine mit einem in einer Ebene verfahrbaren Stickrahmen,
- Figur 2: einen zum Antrieb des Stickrahmens der Stickmaschine nach Figur 1 geeigneten Planarmotor,
- Figur 3: einen Planarmotor mit einem zusätzlichen, externen Meßsystem, und
- Figur 4: eine weitere Stickmaschine mit einem Planarmotor.

### Ausführliche Beschreibung der Zeichnung

Einander entsprechende oder gleichwirkende Teile sind in allen Figuren mit den gleichen Bezugszeichen gekennzeichnet.

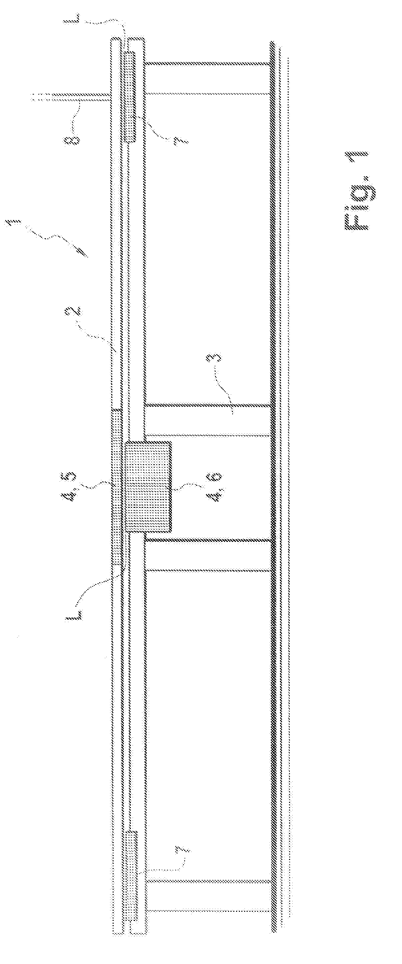

Die Figur 1 zeigt einen Ausschnitt einer Stickmaschine 1, hinsichtlich deren Funktion auf die DE 100 19 020 A1 verwiesen wird. Ein Stickrahmen 2 ist auf einem Gestell 3 der Stickmaschine 1 in einer Ebene verfahrbar gelagert, wobei der maximale Verfahrweg in einer ersten Richtung beispielsweise 100 mm bis 300 mm beträgt und der maximale Verfahrweg in einer hierzu orthogonalen Richtung beispielsweise 150 mm bis 750 mm beträgt.

Der Antrieb des Stickrahmens 2 erfolgt mittels eines Planarmotors 4, welcher ein Primärteil 5 und ein Sekundärteil 6 aufweist. Planarmotoren bietet beispielsweise der Hersteller IDAM GmbH & Co. oHG, D-98527 Suhl, an. Im vorliegenden Fall ist das Primärteil 5 in den Stickrahmen 2 eingebaut, während das Sekundärteil 6 fest mit dem Gestell 3 verbunden ist. Der Stickrahmen 2 bildet somit den Läufer des Planarmotors 4. Abweichend von der symbolisierten Darstellung erstreckt sich das Sekundärteil 6 vorzugsweise über eine größere Fläche als das Primärteil 5. Auch die Anordnung mehrerer, unabhängig voneinander bewegbarer Primärteile 5 auf einem einzigen Sekundärteil 6 ist möglich.

Zur Lagerung des mindestens einen Stickrahmens 2 auf dem Gestell 3 ist mindestens ein Luftlager 7 vorgesehen, vorzugsweise zwei oder mehr Luftlager 7 pro Stickrahmen 2. Dem Luftlager 7 wird Druckluft über eine mit dem Stickrahmen 2 verbundene flexible Druckluftleitung 8 zugeführt. Damit wird ein Luftspalt L von ca. 10 µm bis 15 µm erzeugt, der in Zusammenwirkung mit zwischen den Teilen 5, 6 des Planarmotors 4 wirkenden magnetischen Kräften für eine sehr steife und zugleich reibungsarme Lagerung des Stickrahmens 2 sorgt. Mit dem Planarmotor 4 ist ein Direktantrieb des Stickrahmens 2 realisiert, der jegliche Linearführungen entbehrlich macht.

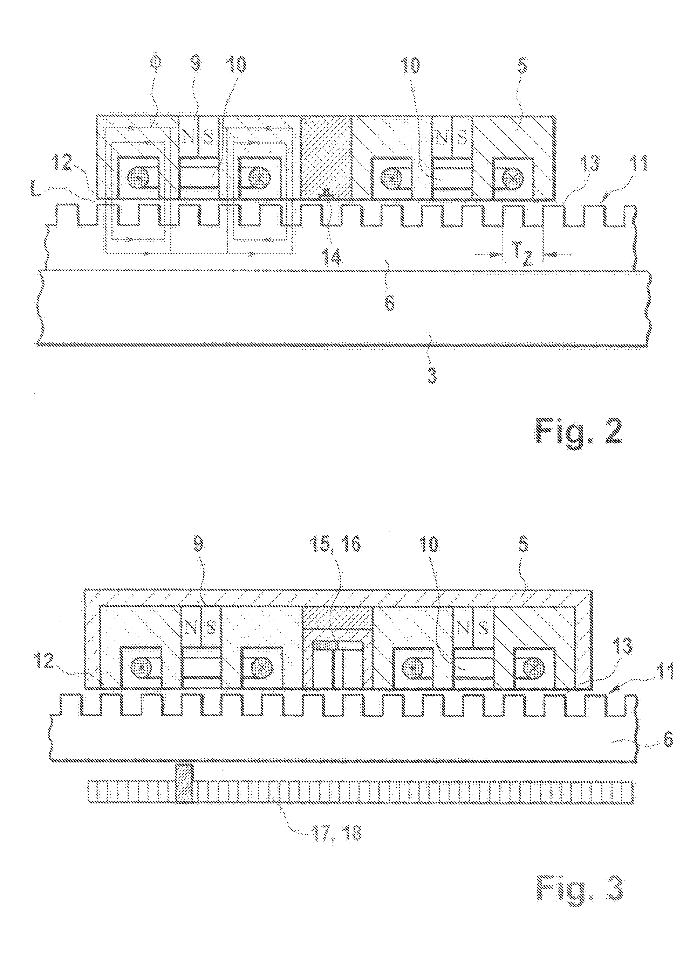

Details des Planarmotors 4 werden im Folgenden anhand der Figuren 2 und 3 erläutert. Das Primärteil 5 des als Reluktanzmotor ausgebildeten Planarmotors 4 umfasst sowohl Permanentmagneten 9 als auch Wicklungen 10. Bei Bestromung der Wicklungen 10 versucht sich das Primärteil 5 relativ zum Sekundärteil 6 gemäß dem Reluktanzprinzip derart zu positionieren, dass der größtmögliche magnetische Fluss φ erreicht wird. In der Anordnung nach Figur 2 ist genauso wie in der Anordnung nach Figur 3 das Primärteil 5 derart positioniert, dass die in der jeweiligen Darstellung linke Wicklung 10 optimal im Sinne der Erreichung eines größtmöglichen magnetischen Flusses φ relativ zum Sekundärteil 6 angeordnet ist. Dies ist anhand einer Zahnung 11 des Sekundärteils 6, deren Teilungsbreite mit T_{z} angegeben ist, erkennbar: Zähne 12 des Primärteils 5 sind exakt über Zähnen 13 des Sekundärteils 6 angeordnet. Wird nun anstelle der in den dargestellten Anordnungen linken Wicklung 10 die rechte Wicklung 10 bestromt, so verlagert sich das Primärteil 5 um ein Viertel der Teilungsbreite T_{z} nach rechts. Dieser Verfahrweg wird als Vollschritt bezeichnet. Abweichend hiervon sind auch Verfahrschritte des Primärteils 5 in wesentlich feineren Stufen möglich. Beispielsweise kann ein Vollschritt in 256 Mikroschritte unterteilt sein, wobei eine derart feine Unterteilung bei Verwendung des Planarmotors 4 in der Stickmaschine 1 in der Regel nicht erforderlich ist.

In der Ausführungsform des Planarmotors 4 nach Figur 2 ist eine Düse 14 erkennbar, die Teil des Luftlagers 7 ist. Eine solche mit der Druckluftleitung 8 verbundene Düse 14 ist auch in der Ausführungsform nach Figur 3 vorhanden, jedoch im dargestellten Querschnitt nicht sichtbar. Stattdessen ist in dieser Darstellung ein interner Lagegeber 15 erkennbar, der ein Teil eines ersten, magnetischen Meßsystems 16 bildet. Darüber hinaus ist ein externer Lagegeber 17 als Teil eines zusätzlichen, beispielsweise optischen inkrementellen Meßsystems 18 vorgesehen. Zur Versorgung des Primärteils 5 mit Druckluft und elektrischem Strom sind in den Figuren 2 und 3 nicht dargestellte, prinzipiell aus der DE 100 46 552 C2 bekannte Versorgungsleitungen vorgesehen, in welche Druckluftleitungen 8 (Figur 1) integriert sind.

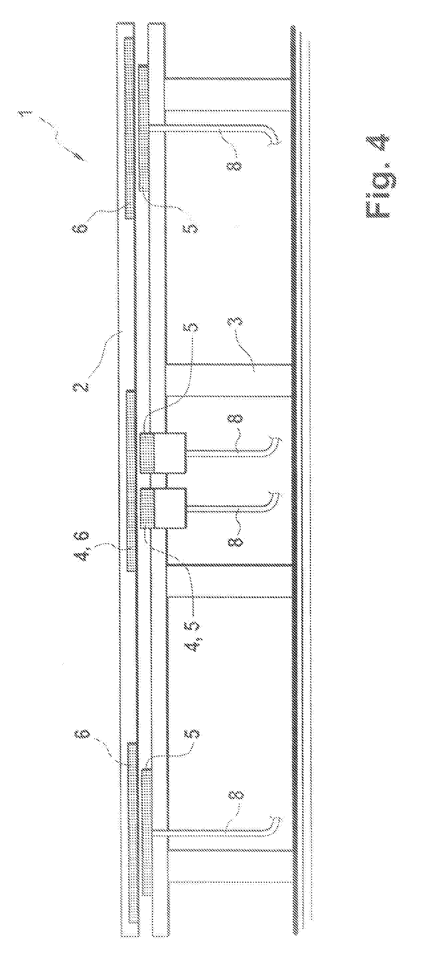

Das Ausführungsbeispiel nach Figur 4 unterscheidet sich vom Ausführungsbeispiel nach Figur 1 im Wesentlichen dadurch, dass die Anordnung von Primärteil 5 und Sekundärteil 6 des Planarmotors 4 vertauscht ist. Der Stickrahmen 2 mit mehreren Sekundärteilen 6 benötigt in diesem Fall keine Energie- und Medienzuleitung. Über den Querschnitt des Stickrahmens 2 verteilt sind drei voneinander beabstandete Sekundärteile 6 angeordnet, wobei die beiden äußeren Sekundärteile 6 jeweils mit einem am Gestell 3 befestigten Primärteil 5 zusammenwirken, während dem mittleren Sekundärteil 6 zwei separate am Gestell 3 gehaltene Primärteile 5 gegenüber liegen. Jedes Sekundärteil 6 wird über eine gestellfeste Strom- und Druckluftzuleitung 8 mit Energie für die Wicklungen 10 (vgl. Fig. 2, 3) sowie mit Druckluft für die Luftlager 7 versorgt. Optional weist auch die Stickmaschine 1 nach Fig. 4 ein externes Meßsystem 18 auf.

### Bezugszeichenliste

- 1: Stickmaschine
- 2: Stickrahmen
- 3: Gestell
- 4: Planarmotor
- 5: Primärteil
- 6: Sekundärteil
- 7: Luftlager
- 8: Druckluftleitung
- 9: Permanentmagnet
- 10: Wicklung
- 11: Zahnung
- 12: Zahn
- 13: Zahn
- 14: Düse
- 15: interner Lagegeber
- 16: magnetisches Meßsystem
- 17: externer Lagegeber
- 18: Meßsystem

- φ: magnetischer Fluss
- L: Luftspalt
- T_{z}: Teilungsbreite

## Patentansprüche

1. Stickrahmenantrieb, mit einem auf einem Gestell (3) geführten Stickrahmen (2), **dadurch gekennzeichnet, dass** zur Führung des Stickrahmens (2) ein Planarmotor (4) vorgesehen ist.

2. Stickrahmenantrieb nach Anspruch 1, **dadurch gekennzeichnet, dass** der Planarmotor (4) als Reluktanzmotor ausgebildet ist.

3. Stickrahmenantrieb nach Anspruch 1 oder 2, **dadurch gekennzeichnet, dass** der Stickrahmen (2) schmierstofffrei auf dem Gestell (3) gelagert ist.

4. Stickrahmenantrieb nach Anspruch 3, **dadurch gekennzeichnet, dass** zur Lagerung des Stickrahmens (2) auf dem Gestell (3) ein Luftlager (7) vorgesehen ist.

5. Stickrahmenantrieb nach einem der Ansprüche 1 bis 4, **dadurch gekennzeichnet, dass** der Stickrahmen (2) ein mit bestrombaren Wicklungen (10) arbeitendes Primärteil (5) und das Gestell (3) ein Sekundärteil (6) des Planarmotors (4) aufweist.

6. Stickrahmenantrieb nach Anspruch 5, **dadurch gekennzeichnet, dass** eine Luftzuführung (8) zum Stickrahmen (2) vorgesehen ist.

7. Stickrahmenantrieb nach einem der Ansprüche 1 bis 4, **dadurch gekennzeichnet, dass** das Gestell (3) ein mit bestrombaren Wicklungen (10) arbeitendes Primärteil (5) und der Stickrahmen (2) ein Sekundärteil (6) des Planarmotors (4) aufweist.

8. Stickrahmenantrieb nach Anspruch 7, **dadurch gekennzeichnet, dass** eine gestellfeste Luftzuführung (8) zum Primärteil (5) vorgesehen ist.
